# EUROPÄISCHE PATENTSCHRIFT

(11) **EP 3 740 033 B1**
(45) Veröffentlichungstag und Bekanntmachung des Hinweises auf die Patenterteilung: **17.01.2024**
(21) Anmeldenummer: 20170868.2
(22) Anmeldetag: 22.04.2020
(51) Int. Cl.: H05B 6/14, H05B 6/06, B23P 11/02

(54) **INDUKTIONSSPULEN-BAUEINHEIT UND VERFAHREN ZUR STEUERUNG EINES INDUKTIVEN ERWÄRMUNGSVORGANGS FÜR EINE INDUKTIONSSPULEN-BAUEINHEIT**
INDUCTION COIL ASSEMBLY AND METHOD FOR CONTROLLING AN INDUCTION HEATING PROCESS FOR AN INDUCTION COIL ASSEMBLY
MODULE DE BOBINE D'INDUCTION ET PROCÉDÉ DE COMMANDE D'UN PROCESSUS DE CHAUFFAGE PAR INDUCTION POUR MODULE DE BOBINE D'INDUCTION

(30) Priorität: 14.05.2019 DE 102019112521
(43) Veröffentlichungstag der Anmeldung: 18.11.2020
(73) Patentinhaber: Haimer GmbH, 86568 Hollenbach-Igenhausen (DE)
(72) Erfinder: Podhrázký, Antonin, 67531 Jemnice (CZ)

(56) Entgegenhaltungen:
- DE-A1-102007 010 226
- DE-A1-102015 016 831
- US-A1- 2001 054 471

## Beschreibung

Die Erfindung betrifft eine **Induktionsspulen-Baueinheit** mit einer Induktionsspule, in welche eine Hülsenpartie eines Werkzeughalters einbringbar ist, sowie ein **Verfahren zur Steuerung eines induktiven Erwärmungsvorgangs** für eine Induktionsspulen-Baueinheit mit einer in einer Induktionsspule der Induktionsspulen-Baueinheit eingebrachten Hülsenpartie eines Werkzeughalters.

Derartige gattungsgemäße Induktionsspulen-Baueinheiten sind aus dem Stand der Technik, beispielsweise aus der EP 1 867 211 A1 bekannt. DE 10 2015 016831 A1 (HAIMER GMBH [DE]) 29. Juni 2017 (2017-06-29) beschreibt ein Verfahren zur Steuerung eines induktiven Erwärmungsvorgangs für eine Induktionsspulen-Baueinheit mit einer in einer Induktionsspule der Induktionsspulen-Baueinheit eingebrachten Hülsenpartie eines Werkzeughalters.

Diese bekannten Induktionsspulen-Baueinheiten werden dazu verwendet, Werkzeughalter mittels durch Induktionsspulen erzeugbarer magnetischer Wechselfelder und der dadurch in den in den Induktionsspulen der Induktionsspulen-Baueinheiten eingebrachten Werkzeughaltern induzierten Wirbelströme thermisch aufzuweiten, um in diesem aufgeweiteten Zustand des Werkzeughalters dort ein Werkzeug einsetzen zu können, das nach einem Abkühlungsvorgang des Werkzeughalters dann fest und symmetrisch von diesem gehalten wird. Dieser Vorgang wird - kurz - auch als induktives Einschrumpfen von Werkzeugen in Werkzeughaltern bezeichnet und ist als solcher bekannt.

Für eine weitergehende Beschreibung der technischen und betriebsmäßigen Hintergründe sei daher auf die genannte Patentanmeldung verwiesen.

Bei einer solchen bekannten Induktionsspulen-Baueinheit stellt sich jedoch das Problem, dass für einen effizienten Betrieb derselben, d.h. dem induktiven Einschrumpfen von Werkzeugen in Werkzeughalter, im Speziellen beim Erwärmen der Werkzeughalter, die Induktionsspulen-Baueinheit hinsichtlich verschiedener Betriebsparameter jeweils individuell auf den gerade/aktuell darin gehaltenen Werkzeughalter einzustellen ist, was einen hohen Grad von manuellem Eingriff erfordert und somit die Taktzeiten zum Tauschen eines Werkzeugs in verschiedenen Typen von Werkzeughaltern unter Umständen deutlich verlängert. Manuelle Eingriffe stellen überdies auch immer potentielle Fehlerquellen dar.

Wird andererseits eine derartige Einstellung auf den momentan gehaltenen Werkzeughalter nicht oder fehlerhaft vorgenommen, kann unter Umständen der Betrieb der Induktionsspulen-Baueinheit ineffizient sein, da die vorgesehenen Wirbelströme nicht geeignet in dem Werkzeughalter induziert werden. In besonders ungünstigen Fällen kann es sogar zu einer Überhitzung und damit Zerstörung des Werkzughalters kommen.

Es ist somit die Aufgabe der vorliegenden Erfindung, eine Induktionsspulen-Baueinheit sowie ein Verfahren zur Steuerung eines induktiven Erwärmungsvorgangs für eine Induktionsspulen-Baueinheit vorzusehen, das die eben genannten Nachteile von aus dem Stand der Technik bekannten derartigen Induktionsspulen-Baueinheiten überwinden kann, wobei die Induktionsspulen-Baueinheit insbesondere einen erhöhten Automatisierungsgrad aufweisen und somit bei hoher Betriebssicherheit mit kürzeren Taktzeiten betrieben werden kann.

Diese Aufgabe wird gelöst durch eine **Induktionsspulen-Baueinheit** und ein **Verfahren zur Steuerung eines induktiven Erwärmungsvorgangs** für eine Induktionsspulen-Baueinheit mit den Merkmalen des jeweiligen unabhängigen Anspruchs. Vorteilhafte Weiterbildungen der Erfindung sind Gegenstand abhängiger Ansprüche sowie der nachfolgenden Beschreibung und beziehen sich sowohl auf die **Induktionsspulen-Baueinheit** als auch auf das **Verfahren zur Steuerung eines induktiven Erwärmungsvorgangs** für eine Induktionsspulen-Baueinheit.

Die **Induktionsspulen-Baueinheit** als auch das **Verfahren zur Steuerung eines induktiven Erwärmungsvorgangs** für eine Induktionsspulen-Baueinheit sehen eine Induktionsspule bei der Induktionsspulen-Baueinheit vor, in welche eine Hülsenpartie eines Werkzeughalters einbringbar ist (anordnungsseitig) bzw. eingebracht ist (verfahrensseitig).

Bei dem **Verfahren zur Steuerung eines induktiven Erwärmungsvorgangs** für eine Induktionsspulen-Baueinheit, beispielsweise eine Schrumpfvorrichtung, mit der in einer Induktionsspule der Induktionsspulen-Baueinheit eingebrachten Hülsenpartie eines Werkzeughalters ist vorgesehen, dass ein definiert vorgegebener (Prüf-)Strom (Prüfimpuls) auf die Induktionsspule noch vor Beginn eines induktiven Erwärmungsvorgangs bei der in die Induktionsspule eingebrachten Hülsenpartie aufgegeben wird.

Für diesen (Prüf-)Strom (Prüfimpuls) wird eine Zeit-/Stromkurve für die in die Induktionsspule eingebrachte Hülsenpartie ermittelt

Anhand der Zeit-/Stromkurve des (Prüf-)Stroms wird die eingebrachte Hülsenpartie erkannt.

Weiter werden dann für die in die Induktionsspule eingebrachte Hülsenpartie auf Basis der Erkennung Erwärmungsparameter festgelegt und der induktive Erwärmungsvorgang wird auf Basis der für die erkannte Hülsenpartie festgelegten Erwärmungsparameter gestartet.

Der induktive Erwärmungsvorgang wird dann zumindest einmal unterbrochen.

Während der Unterbrechung wird ein weiteres Mal ein definiert vorgegebener (Kontroll-)Strom (Kontrollimpuls) auf die Induktionsspule bei der in die Induktionsspule eingebrachten Hülsenpartie aufgegeben und für diesen (Kontroll-)Strom (Kontrollimpuls) wird eine weitere Zeit-/Stromkurve für die in die Induktionsspule eingebrachten Hülsenpartie ermittelt.

Anhand der weiteren Zeit-/Stromkurve des (Kontroll-)Stroms wird dann entschieden, ob der Erwärmungsvorgang fortgesetzt oder (endgültig) beendet wird.

Dabei kann unter "definiert" (bei dem (Prüf-)Strom (Prüfimpuls) und/oder dem (Kontroll-)Strom (Kontrollimpuls)) verstanden werden, dass einen Strom bestimmende Parameter vorab festgelegt, d.h. vorgegeben, sind, welche den Strom damit beschreiben ("Stromparameter").

So kann beispielsweise der definiert vorgegebene (Prüf-)Strom (Prüfimpuls) und/oder der definiert vorgegebene (Kontroll-)Strom (Kontrollimpuls) nach Stromgröße, Stromform, Frequenz und/oder Wirkungsdauer ("Stromparameter") definiert bzw. vorgegeben sein.

Bei entsprechender solcher Festlegung eines Stroms - nach - beispielsweise - den vorbeschriebenen Parametern - kann der (Prüf-)Strom (Prüfimpuls) und/oder der (Kontroll-)Strom (Kontrollimpuls) mindestens ein (Strom-)Impuls sein, d.h. ein stoßartiger Strom mit einem stoßartigen Stromverlauf.

Als zweckmäßig hat sich herausgestellt, dass der (Prüf-)Strom (Prüfimpuls) und/oder der (Kontroll-)Strom (Kontrollimpuls) mehr als einen (Strom-)Impuls, d.h. zwei oder mehrere ((zeitlich) aufeinanderfolgende) (Strom-)Impulse, umfasst, weist die daraus ermittelte Zeit-/Stromkurve höhere Individualität (für einen jeweils eingebrachten Hülsenabschnitt) und Unterscheidbarkeit (desselben) auf.

Ferner ist es weiter auch zweckmäßig, wenn der (Prüf-)Strom (Prüfimpuls) und/oder der (Kontroll-)Strom (Kontrollimpuls) gleich sind, ermöglicht dies eine Vergleichbarkeit der Zeit-/Stromkurven.

Dabei kann eine Zeit-/Stromkurve ein Stromstärkenverlauf oder ein Spannungsverlauf sein.

Ferner kann es auch zweckmäßig sein, die Ermittlung der Zeit-/Stromkurve des (Prüf-)Strom (Prüfimpuls) bzw. des (Kontroll-)Strom (Kontrollimpuls) durch Messung zu bewerkstelligen. Ein entsprechendes Messgerät (oder eine funktionsvergleichbare Schaltung) kann bei der Induktionsspulen-Baueinheit vorgesehen werden.

Eine solche Messung der Zeit-/Stromkurve des (Prüf-)Strom (Prüfimpuls) bzw. des (Kontroll-)Strom (Kontrollimpuls) kann dabei in einem Eingangskreis einer Schaltung der Induktionsspulen-Baueinheit und/oder einem Zwischenkreis der Induktionsspulen-Baueinheit und/oder Ausgangskreis bzw. an der Induktionsspule durchgeführt werden. Entsprechendes gilt im Allgemeinen für die Ermittlung der Zeit-/Stromkurve des (Prüf-)Strom (Prüfimpuls) bzw. des (Kontroll-)Strom (Kontrollimpuls) .

Die Messungen können auch parallel am mehreren der genannten Stellen der Schaltung durchgeführt werden.

Die ermittelte, insbesondere gemessene, Zeit-/Stromkurve des (Prüf-)Strom (Prüfimpuls) und/oder die ermittelte, insbesondere gemessene, Zeit-/Stromkurve des (Prüf-)Strom des (Kontroll-)Strom (Kontrollimpuls) kann dann ausgewertet werden.

Weiterhin kann es auch zweckmäßig sein, die Zeit-/Stromkurve des (Prüf-)Strom (Prüfimpuls) und/oder die Zeit-/Stromkurve des (Prüf-)Strom des (Kontroll-)Strom (Kontrollimpuls) auf eine Referenzspannung zu normieren, beispielsweise auf eine deutsche Referenznetzspannung. Eine solche Normierung ermöglicht die Unabhängigkeit des Verfahrens von einem jeweiligen Land mit dortiger jeweiliger Netzspannung.

"Erkannt" (bei der Erkennung der eingebrachten Hülsenpartie anhand der Zeit-/Stromkurve des (Prüf-)Strom (Prüfimpuls)) kann bedeuten, dass anhand der Zeit-/Stromkurve des (Prüf-)Strom (Prüfimpuls) der eingebrachten Hülsenpartie eine bestimmte Eigenschaft, beispielsweise eine bestimmte Geometrie, wie ein Außendurchmesser, zuerkannt bzw. zugewiesen wird.

D.h., vereinfacht ausgedrückt, anhand der Zeit-/Stromkurve des (Prüf-)Strom (Prüfimpuls) wird "angenommen" - oder anders ausgedrückt - aus der Zeit-/Stromkurve des (Prüf-)Strom (Prüfimpuls) wird "abgeleitet", dass es sich bei der eingebrachten Hülsenpartie um eine bestimmte Hülsenpartie einer bestimmten Art, beispielsweise mit einer ganz bestimmten Geometrie, wie mit einem ganz bestimmten Außendurchmesser, handelt.

So kann dadurch beispielsweise anhand der Zeit-/Stromkurve des (Prüf-)Strom (Prüfimpuls) für eine eingebrachte Hülsenpartie ein Außendurchmesser ermittelt werden.

Vereinfacht, anschaulich und beispielhaft hierfür ausgedrückt, die Zeit-/Stromkurve des (Prüf-)Stroms (Prüfimpuls) kann ausgewertet werden. Dabei kann eine (oder auch mehrere) Zeit-/Stromkurven-Kenngröße ermittelt werden, anhand welcher eine Geometriegröße, wie der Außendurchmesser, der eingebrachten Hülsenpartie ermittelt/abgeleitet wird.

Entsprechendes kann auch für die bzw. bei der Zeit-/Stromkurve des (Kontroll-)Stroms (Kontrollimpuls) durchgeführt werden, wobei auch dann eine (oder auch mehrere) Zeit-/Stromkurven-Kenngrößen ermittelt werden können. Anhand dieser kann beispielsweise dann ein Erwärmungszustand für die eingebrachte Hülsenpartie ermittelt/abgeleitet werden.

Eine solche Zeit-/Stromkurven-Kenngröße kann beispielsweise eine Fläche, eine Amplitude, insbesondere ein Amplituden-Extremum, eine Anzahl und/oder ein zeitlicher Abstand von Nulldurchgängen, eine Flankensteilheit und/oder eine Tangente bei der Zeit-/Stromkurve oder eine daraus abgeleitete, insbesondere statistisch abgeleitete, Kenngröße sein.

Besonderes zweckmäßig kann es auch sein, mehrere der vorgenannten Kenngrößen zu der Zeit-/Stromkurven-Kenngröße zu kombinieren, kann dadurch die Aussagekraft der Zeit-/Stromkurven-Kenngröße erhöht werden.

Gilt bzw. ist dann die eingebrachte Hülsenpartie erkannt, so werden (bzw. können) für die eingebrachte Hülsenpartie Erwärmungsparameter bestimmt bzw. festgelegt (bzw. werden).

Solche Erwärmungsparameter können insbesondere sein eine Zeit für den Erwärmungsvorgang, beispielsweise eine Gesamterwärmungszeit des Erwärmungsvorgangs und/oder eine Zeit für eine Ersterwärmung des bzw. bei dem Erwärmungsvorgang und/oder eine Schrumpf-/Erwärmungsfrequenz und/oder eine Schrumpf-/Erwärmungstemperatur sowie und/oder auch ein Induktivitätsveränderungsparameter und/oder ein Widerstandsveränderungsparameter.

Die Zeit für die Ersterwärmung des Erwärmungsvorgangs kann beispielsweise 1/3 bis 1/2 der Zeit für den Erwärmungsvorgang sein.

Auf Basis bzw. unter Verwendung dieser für die erkannte Hülsenpartie festgelegten Erwärmungsparameter wird dann der induktive Erwärmungsvorgang gestartet.

Ist bislang bei der in die Induktionsspule der Induktionsspulen-Baueinheit eingebrachten Hülsenpartie des Werkzeughalters keine Erwärmung dort in der Induktionsspule durchgeführt worden, so kann der Beginn des Erwärmungsvorgangs als Ersterwärmung bezeichnet werden. Eine nachfolgende (Erwärmungs-)Phase bzw. nachfolgende Phase des Erwärmungsvorgangs können als Nacherwärmungen bezeichnet werden. Erfolgt keine Erwärmung der in die Induktionsspule der Induktionsspulen-Baueinheit eingebrachten Hülsenpartie dort in der Induktionsspule mehr, so kann dies als Beendigung des Erwärmungsvorgangs gelten.

Zweckmäßig ist es auch, die zumindest einmalige Unterbrechung, d.h. die erste Unterbrechung, nach einer vorgebbaren (Erst-)Erwärmungsdauer durchzuführen bzw. eintreten zu lassen. Diese (Erst-)Erwärmungsdauer kann abhängig von einer vorgebbaren Gesamterwärmungszeit sein, beispielsweise ein bestimmter Bruchteil der Gesamterwärmungszeit, wie ein oder zwei Drittel der Gesamterwärmungszeit, - oder kann als absolute Zeitdauer, wie eine oder eineinhalb Sekunden, festgelegt werden.

Weiterhin kann, um die Durchführung eines (Kontroll-)Stroms (Kontrollimpuls) zu verbessern, vorgesehen sein, dass während einer Unterbrechung des Erwärmungsvorgangs vor Aufgabe des weiteren, definiert vorgegebenen (Kontroll-)Stroms (Kontrollimpuls) ein Aufladevorgang bei einer den weiteren definiert vorgegebenen (Kontroll-)Strom (Kontrollimpuls) erzeugenden Baueinheit durchgeführt wird.

Ein solches Aufladen kann beispielsweise dadurch erfolgen, dass bei dem Aufladevorgang ein Kondensator eines Schwingkreises aufgeladen wird.

Entsprechendes kann auch für ein bzw. bei einem mehrmaligen Unterbrechen des Erwärmungsvorgangs durchgeführt werden.

Ein mehrmaliges Unterbrechen des Erwärmungsvorgangs kann beispielsweise in der Form erfolgen, dass - wird der Erwärmungsvorgang so mehrmals unterbrochen - während jeder Unterbrechung ein weiteres Mal der definiert vorgegebene (Kontroll-)Strom (Kontrollimpuls) auf die Induktionsspule bei der in die Induktionsspule eingebrachten Hülsenpartie aufgegeben wird, für diesen (Kontroll-)Strom (Kontrollimpuls) eine weitere Zeit-/Stromkurve für die in die Induktionsspule eingebrachte Hülsenpartie ermittelt wird und anhand der weiteren Zeit-/Stromkurve entschieden wird, ob der Erwärmungsvorgang nach der jeweiligen Unterbrechung fortgesetzt oder endgültig beendet wird.

Auch hierfür bzw. hierbei können - für die jeweiligen (Kontroll-)Ströme (Kontrollimpulse) - die beschriebenen Zeit-/Stromkurven-Kenngrößen ermittelt werden bzw. die beschriebenen Auswertungen durchgeführt werden.

Zweckmäßig kann es dann hier auch sein, dass die Entscheidung den Erwärmungsvorgang fortzusetzen, in Abhängigkeit einer vorgegebenen Veränderung der Zeit-/Stromkurve des (Prüf-)Stroms getroffen wird.

D.h., vereinfacht ausgedrückt, eine Zeit-/Stromkurve des (Kontroll-)Stroms wird mit der Zeit-/Stromkurve des (Prüf-)Stroms verglichen, beispielsweise durch einen Zeit-/Stromkurven-Kenngrößenvergleich, wobei insbesondere eine - vorgebbare - Veränderung der Zeit-/Stromkurve des (Prüf-)Stroms bzw. der entsprechenden Zeit-/Stromgrößen-Kenngröße, berücksichtigt bzw. in diese eingerechnet werden kann.

Ursache für eine solche - berücksichtigbare bzw. vorgegebene - Veränderung der Zeit-/Stromkurve des (Prüf-)Stroms (oder dessen Kenngröße) kann eine temperaturabhängige Veränderung einer Induktivität und/oder einer elektrischen Eigenschaft, wie eines elektrischen Widerstands, bei einer Hülsenpartie eines Werkzeughalters beschreiben.

Diese temperaturabhängige Veränderung einer Induktivität bzw. einer elektrischen Eigenschaft/eines elektrischen Widerstands bei einer Hülsenpartie eines Werkzeughalters kann zweckmäßigerweise unter Verwendung eines, insbesondere empirisch ermittelten, Induktivitätsveränderungsparameters und/oder eines elektrischen (Widerstands-)Parameters bzw. Widerstandsveränderungsparameters beschrieben werden.

Diesem liegt die erfindungsgemäße Erkenntnis zugrunde, dass sich die Induktivität der Induktionsspule und/oder eine elektrische Eigenschaft, wie der elektrische Widerstand, in Abhängigkeit der Erwärmung bzw. der Erwärmungstemperatur der eingebrachten Hülsenpartie verändert.

Durch einen - vorgebbaren - Parameter, insbesondere von der Geometrie und/oder dem Material der eingebrachten Hülsenpartie, wie einem Außendurchmesser der eingebrachten Hülsenpartie, abhängigen Parameter (auch andere Abhängigkeiten können hier berücksichtigt werden), wie den genannten Induktivitätsveränderungsparameter oder den genannten Widerstandsveränderungsparameter, kann diese Veränderung berücksichtigt werden - und so darüber auch eine Grenze (Grenzwert) für eine Erwärmung bzw. Erwärmungstemperatur bei der eingebrachten Hülsenpartie festgelegt werden.

Der Induktivitätsveränderungsparameter kann so auch zweckmäßigerweise abhängig vom Material der Hülsenpartie sein. Entsprechendes gilt auch für den elektrischen Widerstandsparameter.

Anschaulich ausgerückt, man kann unter Verwendung eines solchen Parameters und der Zeit-/Stromkurve des (Prüf-)Stroms (Prüfimpuls) eine Grenz-Zeit-/Stromkurve bzw. Grenz-Zeit-/Stromkurven-Kenngröße (d.h. ein (Erwärmungs-)Abbruchkriterium für eine zugelassene Erwärmung/-stemperatur bei der eingebrachten Hülsenpartie) definieren, welche Grenz-Zeit-/Stromkurve bzw. Grenz-Zeit-/Stromkurven-Kenngröße mit der (jeweiligen) Zeit-/Stromkurve des (Kontroll-)Stroms bzw. dessen Zeit-/Stromkurven-Kenngröße verglichen werden kann.

Übersteigt (oder unterschreitet) dann beispielsweise die Zeit-/Stromkurve des (jeweiligen) (Kontroll-)Stroms diese zugelassene Grenz-Veränderung bzw. -grenze, kann die Erwärmung der eingebrachten Hülsenpartie abgebrochen und so die Erwärmung (über eine solche Grenze hinaus) verhindert werden ("Überhitzungsschutz").

Ferner kann auch eine Erwärmungsphase bzw. dessen Dauer zwischen zwei Unterbrechungen nach beschriebenen Kriterien festgelegt werden, beispielsweise in Abhängigkeit der Erwärmungsdauer (Bruchteil) oder einer absoluten vorgebbaren (Zwischen-)Erwärmungsdauer.

Weiterhin ist es auch möglich, dass mehrere weitere definiert vorgegebene (Anpassungs-)Ströme (Anpassungsimpulse) auf die Induktionsspule, insbesondere noch vor Beginn oder am Anfang des induktiven Erwärmungsvorgangs bei der in die Induktionsspule eingebrachten Hülsenpartie aufgegeben werden, insbesondere ohne eine zwischen zwei von den (Anpassungs-)Strömen (Anpassungsimpulsen) durchgeführte Erwärmung bei der eingebachten Hülsenpartie, und dass für diese (Anpassungs-)Ströme (Anpassungsimpulse) Zeit-/Stromkurven für die in die Induktionsspule eingebrachte Hülsenpartie ermittelt werden.

Weiter kann dann anhand der Zeit-/Stromkurven der (Anpassungs-)Ströme eine Schrumpf-/Erwärmungsfrequenz, im Allgemeinen ein Stromparameter, bei dem bzw. für den auf die Induktionsspul aufzugebenden (Erwärmungs-)Strom festgelegt werden.

Werden so beispielsweise diese (Anpassungs-)Ströme (Anpassungsimpulse) vor Beginn des induktiven Erwärmungsvorgangs bei der in die Induktionsspule eingebrachten Hülsenpartie aufgegeben, so kann ein (Anpassungs-)Strom (Anpassungsimpuls) zugleich auch der (Prüf-)Strom (Prüfimpuls) sein bzw. vice versa.

Definition, Zeit-/Stromkurven-Kennwerte, Auswertungen, Messungen, wie bei dem (Prüf-)Strom (Prüf-)Impuls und/oder dem (Kontroll-)Strom (Kontrollimpuls), können auch für einen (Anpassungs-)Strom (Anpassungsimpuls) vorgesehen werden.

So kann insbesondere auch vorgesehen sein, die Zeit-/Stromkurven der (Anpassungs-)Ströme auszuwerten, wobei bei der Auswertung für die Zeit-/Stromkurven der (Anpassungs-)Ströme jeweils eine Zeit-/Stromkurven-Kenngröße zu ermitteln und diese zu vergleichen.

Werden so beispielsweise mehrere (Anpassungs-)Ströme (Anpassungsimpulse) (kurzzeitig) hintereinander aufgebracht, wobei jeder eine veränderten Stromparameter, beispielsweise jeweils unterschiedlich Frequenzen, aufweist, so kann auf diese Weise Wissen über eine Resonanzfrequenz für die eingebrachte Hülsenpartie erworben werden, welches für eine Festlegung der Frequenz für den (Erwärmungs-)Strom (d.h. die Schrumpf-/Erwärmungsfrequenz) verwendet werden kann.

So ist es insbesondere zweckmäßig, die Frequenz für den (Erwärmungs-)Strom (d.h. die Schrumpf-/Erwärmungsfrequenz) nahe an der Resonanzfrequenz festzulegen, beispielsweise "knapp" darüber, steigt mit Annäherung der Schrumpf-/Erwärmungsfrequenz an die Resonanzfrequenz die Effizienz/Effektivität der Erwärmung. Die Festlegung der Schrumpf-/Erwärmungsfrequenz gleich mit der Resonanzfrequenz sollte vermieden werden, können andernfalls Resonanzeffekte zu einer Überlastung von Bauteilen bei der Induktionsspulen-Baueinheit führen.

Bei der **Induktionsspulen-Baueinheit** - zur Durchführung des Verfahrens - ist weiter eine Schaltung vorgesehen, mittels welcher der (Prüf-)Strom (Prüfimpuls) und der (Kontroll-)Strom erzeugbar sind.

Ferner ist bei der **Induktionsspulen-Baueinheit** auch eine Steuereinheit vorgesehen, mittels welcher die Induktionsspule und die Schaltung steuerbar sind. Die Steuereinheit ist darüber hinaus derart eingerichtet, dass - kurz - das Verfahren (in seinen Grundzügen, wie insbesondere auch mit all den vorbeschriebenen Ausgestaltungen und Weiterbildungen) durchführbar ist.

D.h., die die Induktionsspule und die Schaltung steuernde Steuereinheit ist derart eingerichtet, dass
- der definiert vorgegebene (Prüf-)Strom (Prüfimpuls) auf die Induktionsspule noch vor Beginn eines induktiven Erwärmungsvorgangs bei der in die Induktionsspule eingebrachten Hülsenpartie aufgebbar ist, für diesen (Prüf-)Strom (Prüfimpuls) eine Zeit-/Stromkurve für die in die Induktionsspule eingebrachten Hülsenpartie ermittelbar ist und anhand der Zeit-/Stromkurve des (Prüf-)Stroms die eingebrachte Hülsenpartie erkennbar ist,
- für die in die Induktionsspule eingebrachte Hülsenpartie auf Basis der Erkennung Erwärmungsparameter festlegbar sind und der induktive Erwärmungsvorgang auf Basis der für die erkannte Hülsenpartie festgelegten Erwärmungsparameter startbar ist,
- der induktive Erwärmungsvorgang zumindest einmal unterbrechbar ist, während der Unterbrechung ein weiteres Mal ein definiert vorgegebener (Kontroll-)Strom (Kontrollimpuls) auf die Induktionsspule bei der in die Induktionsspule eingebrachten Hülsenpartie aufgebbar ist und für diesen (Kontroll-)Strom (Kontrollimpuls) eine weitere Zeit-/Stromkurve für die in die Induktionsspule eingebrachte Hülsenpartie ermittelbar ist,
- anhand der weiteren Zeit-/Stromkurve des (Kontroll-)Stroms entscheidbar ist, ob der Erwärmungsvorgang fortgesetzt oder endgültig beendet wird.

Zweckmäßig kann es sein, dass die Schaltung mindestens ein Leistungshalbleiterbauelement, insbesondere mindestens einen Bipolartransistor mit isolierter Gate-Elektrode (IGBT) und/oder einen Metall-Oxid-Halbleiter-Feldeffekttransistor (MOSFET), aufweist, weisen diese gutes Durchlassverhalten, hohe Sperrspannungen und Robustheit auf - und sind darüber hinaus nahezu leistungslos ansteuerbar.

Indem durch das **Verfahren** sowie bei der **Induktionsspulen-Baueinheit** ein weitestgehend automatischer bzw. automatisierter Betrieb, d.h. das induktive Einschrumpfen von Werkzeugen in Werkzeughaltern, im Speziellen das Erwärmen der Werkzeughalter, für jeweils einen gerade in der Induktionsspulen-Baueinheit eingebrachten Werkzeughalter durchgeführt werden kann, werden manuelle Eingriffe zur Einstellung von Betriebsparametern hierbei überflüssig gemacht, so dass einerseits die hierfür bisher benötigte Zeit eingespart wird und andererseits durch den automatischen/automatisierten Betrieb auch hohe Standards hinsichtlich Betriebssicherheit und Toleranzen eingehalten werden können, um einen vorschriftsmäßigen Betrieb der Baueinheit sicherstellen zu können. Auch ein effizienter Schutz vor Überhitzen eines zu erwärmenden/aufzuweitenden Werkzeughalters kann durch das Verfahren und bei der Induktionsspulen-Baueinheit bewirkt werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Insbesondere sind diese Merkmale jeweils einzeln und in beliebiger geeigneter Kombination mit dem erfindungsgemäßen Verfahren kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Induktionsspulen-Baueinheit gemäß einer Ausführung im Mittel-Längsschnitt;
- FIG 2: einen Schaltplan einer Schaltung zum Speisen einer Induktionsspule, die für eine InduktionsspulenBaueinheit zum Einsatz kommen kann;
- FIG 3: einen auf eine Induktionsspule aufgebbaren Prüfimpuls (mit einem Spannungsimpuls) und zugehöriger Zeit-/Stromkurve;
- FIG 4: einen auf eine Induktionsspule aufgebbaren Prüfimpuls (mit drei Spannungsimpulsen) und zugehörige Zeit-/Stromkurve;
- FIG 5: (schematisch) einen Zeit-/Stromkurven-Verlauf bei einer Erwärmung bzw. einem Schrumpfvorgang;
- FIG 6: (schematisch) ein Schaltplan einer Schaltung zum gesteuerten Speisen einer Induktionsspule, die für eine Induktionsspulen-Baueinheit zum Einsatz kommen kann.

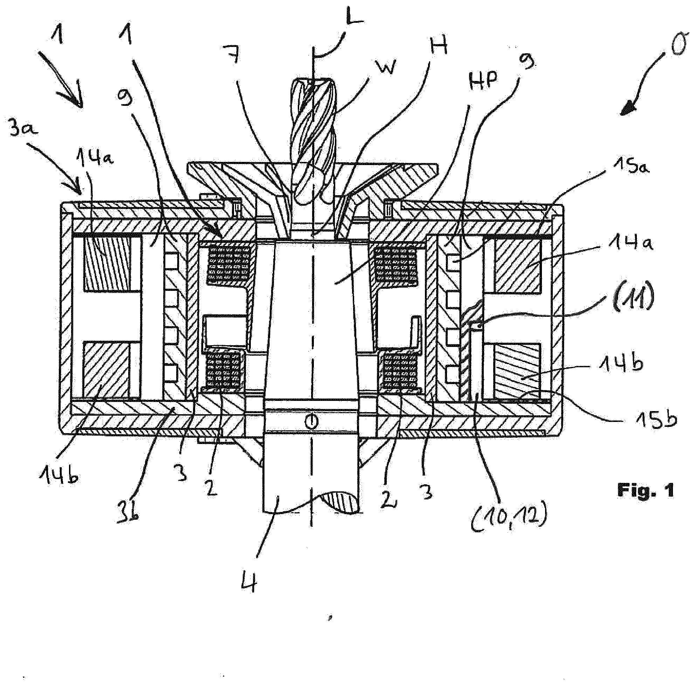

Fig. 1 zeigt einen grundlegenden Aufbau einer Induktionsspulen-Baueinheit, welche aufgrund ihrer hier vorgesehenen Funktion (im Folgenden) auch als Schrumpfvorrichtung bezeichnet werden soll.

Wie Fig. 1 verdeutlicht, sieht die Schrumpfvorrichtung 0 eine Induktionsspule 1 mit einzelnen Windungen 2 vor, in deren Zentrum ein Werkzeughalter 4 eingeschoben wird, um den Halteschaft H eines Werkzeugs W, wie hier beispielsweise eines Fräsers, in die Hülsenpartie HP ein- oder auszuschrumpfen. Das Funktionsprinzip, das dem Ein- und Ausschrumpfen zu Grunde liegt, ist näher in der deutschen Patentanmeldung DE 199 15 412 A1 beschrieben.

An ihrem Außenumfang ist die Induktionsspule 1 mit einem ersten Mantel 3 aus elektrisch nichtleitendem und magnetisch leitendem Material versehen.

Typischerweise besteht der erste Mantel 3 entweder aus einem Ferrit oder einem Metallpulver bzw. Metallsinterwerkstoff, dessen einzelne Partikel elektrisch isolierend voneinander getrennt sind und die auf diese Art und Weise insgesamt gesehen im Wesentlichen magnetisch leitend und elektrisch nichtleitend sind.

Der erste Mantel 3 ist weiter so ausgeführt, dass er in Umfangsrichtung völlig in sich geschlossen ist, also die Umfangsfläche der Induktionsspule 1 vollständig überdeckt, so dass auch in der Theorie keinerlei "magnetische Lücken" verbleiben, abgesehen von irrelevanten lokalen Durchbrüchen, wie etwa einzelnen und/oder kleinen lokalen Bohrungen o. ä.

Wie Fig. 1 weiter auch zeigt, hat bei der Schrumpfvorrichtung 0 die Abschirmung aus magnetisch leitendem und elektrisch nichtleitendem Material mit dem ersten Mantel 3 nicht bereits ihr Bewenden.

Stattdessen schließt sich an mindestens einer, besser beiden Stirnseiten des ersten Mantels 3 eine magnetische Abdeckung 3a, 3b aus dem besagten Material an, die im Regelfall den ersten Mantel 3 kontaktieren.

Auf der dem Werkzeughalter 4 abgewandten Stirnseite der Induktionsspule 1 ist die magnetische Abdeckung 3a vorzugsweise als ganz oder bevorzugt abschnittweise auswechselbarer Polschuh ausgebildet, d. h. als ringförmiges Gebilde mit einer zentralen Öffnung, die einen Durchlass 7 für das ein- oder auszuspannende Werkzeug W bildet.

Auf der dem Werkzeughalter 4 zugewandten Stirnseite der Induktionsspule 1 ist die magnetische Abdeckung 3b vorzugsweise als in sich ebene Ringscheibe ausgestaltet, die die Wicklungen der Induktionsspule 1 idealerweise vollständig übergreift und einen zentralen Durchlass für die Hülsenpartie HP aufweist.

Um die Abschirmung noch weiter zu verbessern, sind, wie Fig. 1 auch zeigt, die Induktionsspule 1 und ihr erster Mantel 3 an dessen Außenumfang von einem zweiten Mantel 9 umgeben - und zwar so, dass der erste Mantel 3 und der zweite Mantel 9 einander berühren, idealerweise auf dem überwiegenden bzw. gesamten Teil ihrer einander zugewandten Umfangsflächen.

Dieser zweite Mantel 9 ist aus magnetisch nicht leitfähigem und elektrisch leitfähigem Material, beispielsweise Aluminium, hergestellt.

Unter "elektrisch leitfähig" wird hier ein nicht nur lediglich lokal, sozusagen "kornweise" elektrisch leitfähiges Material verstanden, sondern ein Material, das in relevantem Umfang die Ausbildung von Wirbelströmen zulässt.

Das Besondere an dem zweiten Mantel 9 ist, dass er bevorzugt so ausgelegt und bevorzugt in radialer Richtung so dick ausgelegt ist, dass in ihm unter dem Einfluss des ihn durchdringenden Streufeldes der Induktionsspule 1 Wirbelströme erzeugt werden, die eine Schwächung des unerwünschten Streufeldes bewirken.

Weiter ist der zweite Mantel 9 an seinem Umfang von den nachfolgend noch näher zu erläuternden Leistungshalbleiterbauelementen 10 umgeben, die unmittelbar am Außenumfang des zweiten Mantels 9 in dortigen Aussparungen 11 angeordnet sind (nur angedeutet).

Diese Leistungshalbleiterbauelemente 10 weisen zwei große Hauptflächen und vier kleine Seitenflächen auf. Die großen Hauptflächen sind vorzugsweise mehr als viermal größer als jede der einzelnen Seitenflächen.

Die Leistungshalbleiterbauelemente 10 sind so angeordnet, dass eine ihrer großen Hauptflächen in wärmeleitendem Kontakt mit dem zweiten Mantel 9 steht, im Regelfall an dessen Außenumfang, wobei die betreffende große Hauptfläche des Leistungshalbleiterbauelements 10 mithilfe eines wärmeleitenden Klebstoffs an die Umfangsoberfläche des zweiten Mantels 9 angeklebt ist.

Jedes der Leistungshalbleiterbauelemente 10 besitzt drei Anschlüsse 12 zur Spannungsversorgung (nur angedeutet).

Weiter sind, wie Fig. 1 auch zeigt, Kondensatoren 14a, 14b am Außenumfang der Induktionsspule 1 um diese herumgruppiert sind.

Bei den Kondensatoren 14a handelt es sich bevorzugt um Glättungskondensatoren, die unmittelbarer Bestandteil eines Leistungskreises sind; bei den Kondensatoren 14b handelt es sich bevorzugt um Schwingkreiskondensatoren, die ebenfalls unmittelbarer Bestandteil des Leistungskreises sind.

Um die Kondensatoren 14a, 14b elektrisch anzuschließen, sind hier mehrere elektrische Platinen 15a, 15b vorgesehen, die jeweils den Außenumfang der Induktionsspule 1 umgreifen.

Jede dieser Platinen 15a, 15b bildet vorzugsweise eine Ringscheibe. Jeder der Platinen 15a, 15b besteht vorzugsweise aus FR4 oder ähnlichen für Platinen gebräuchlichen Materialien.

Wie man in Fig. 1 auch sieht, ist die Rotationssymmetrieachse jeder der beiden hier als Platinenringscheiben ausgeführten Platinen 15a, 15b hier koaxial zur Längsachse L der Induktionsspule (auch des Werkzeughalters 4/Werkzeugs W).

Die obere der beiden elektrischen Platinen 15a trägt die Glättungskondensatoren 14a, deren Anschlussfahnen die obere Platine 15a durchgreifen oder mithilfe der SMD-Technik mit der oberen Platine 15a verbunden sind, so, dass die Glättungskondensatoren 14a von der oberen Platine 15a herabhängen.

Die untere der beiden Platinen 15b ist entsprechend aufgebaut, die Schwingkreiskondensatoren 14b stehen nach oben von ihr ab.

Anschaulich zusammengefasst, die Leistungshalbleiter 10 bilden einen ersten gedachten Zylinder, der die Induktionsspule 1 umringt; die Kondensatoren 14a, 14b bilden einen zweiten gedachten Zylinder, der den ersten gedachten Zylinder umringt; die gegenüber dem Streufeld nur weniger empfindlichen Kondensatoren 14a, 14b bilden den gedachten, äußeren Zylinder, während die auf einen möglichst streufeldarmen Einbauraum angewiesenen Leistungshalbleiterbauelemente 10 den gedachten, inneren Zylinder bilden.

Wie weiter Fig. 1 zeigt, ist die Induktionsspule 1 nicht über ihre gesamte Länge in Richtung ihrer Längsachse L hinweg "voll bewickelt" ist. Stattdessen besteht sie - hier - aus zwei, im Regelfall zylindrischen Wicklungspaketen. Diese bilden jeweils eine Stirnseite der Induktionsspule 1. Sie halten untereinander einen Abstand ein, der - hier beispielshaftca. um mindestens den Faktor 1,5 größer ist, als die Erstreckung jeder der Wicklungspakete in Richtung der Längsachse L der Induktionsspule 1.

Eine derartige Induktionsspule 1 trägt zur Verringerung der Blindleistung bei, da ihr die Wicklungen im "Mittenbereich" fehlen, die unter dem Gesichtspunkt der möglichst effektiven Beheizung der Hülsenpartie HP des Werkzeughalters nicht unbedingt benötigt werden, die aber - wenn vorhanden - die Tendenz haben zusätzliche Blindleistung produzieren, ohne einen wirklich wichtigen Beitrag zur Beheizung zu leisten.

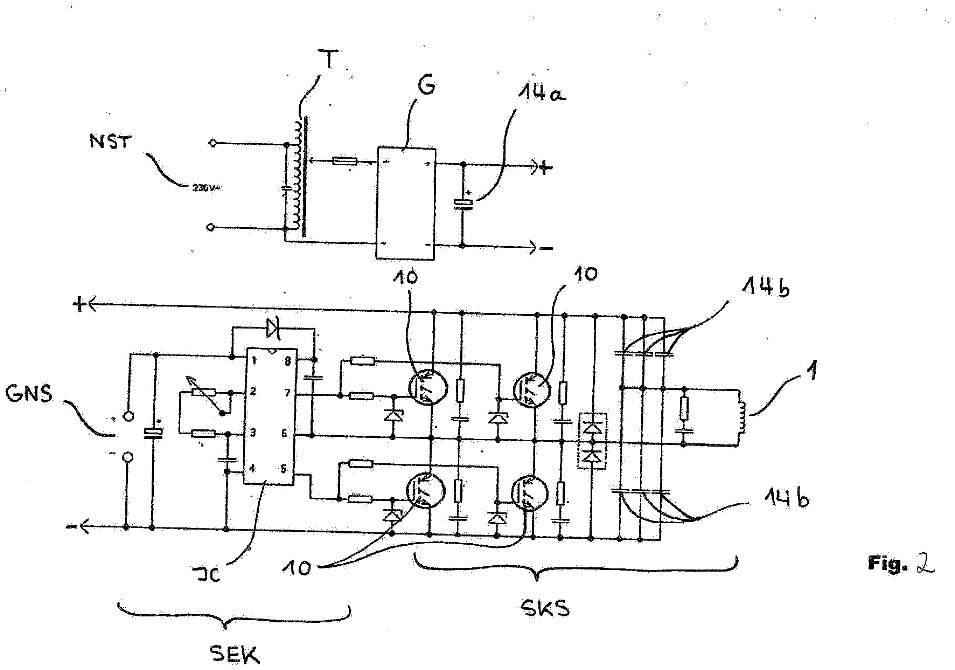

Um die Induktionsspule 1 - mit möglichst wenig Blindleistungsverlusten - zu versorgen, ist ein Schwingkreis SKS vorgesehen (vgl. Fig. 2).

Bei dem Schwingkreis SKS schwingt der überwiegende Teil der benötigten Energie periodisch (hochfrequent) zwischen der Induktionsspule 1 und einer Kondensatoreinheit 14a, 14b hin- und her. Dadurch muss in jeder Periode bzw. periodisch nur die dem Schwingkreis SKS durch seine Heizleistung und seine sonstige Verlustleistung entzogene Energie nachgespeist werden. Somit entfallen die bisherigen, sehr hohen Blindleistungsverluste.

Die die Induktionsspule 1 speisende Leistungselektronik wird, wie Fig. 2 zeigt, eingangsseitig mit dem allgemein verfügbaren Netzstrom NST, der in Europa 230 V / 50 Hz / 16Aₘₐₓ (in andern Ländern entsprechende Werte z. B. USA 110 V) beträgt, gespeist.

Der Netzstrom NST wird dann, wie Fig. 2 auch zeigt, auf eine höhere Spannung hochtransformiert (Trafo T), um die bei vorgegebener Leistung fließenden Ströme zu verringern.

Der aus dem Netz bezogene Strom wird vom Gleichrichter G in Gleichstrom umgewandelt, der seinerseits durch den oder die Glättungskondensatoren 14a geglättet wird.

Mit diesem Gleichstrom wird der eigentliche Schwingkreis SKS gespeist.

Das Rückgrat des Schwingkreises SKS bilden die Leistungshalbleiterbauelemente 10, die Schwingkreiskondensatoren 14b und die zum Ein- und Ausschrumpfen dienende Induktionsspule 1.

Gesteuert bzw. geregelt wird der Schwingkreis SKS von Steuerelektronik SEK, die im Wesentlichen als IC ausgebildet ist und die über einen eigenen Eingang GNS mit Gleichstrom-Niederspannung gespeist wird, die ggf. hinter dem Gleichrichter G und dem oder den Glättungskondensatoren 14a über einen entsprechenden Spannungsteiler-Widerstand abgegriffen wird.

Die Leistungshalbleiterbauelemente 10 werden vorzugsweise durch Transistoren des Typs "Insulated-Gate Bipolar Transistor" kurz IGBT verwirklicht.

Die Steuerelektronik SEK schaltet die Leistungshalbleiterbauelemente 10/IGBT mit einer Frequenz, die die sich am Schwingkreis SKS einstellende Arbeitsfrequenz vorgibt.

Wichtig ist, dass der Schwingkreis SKS niemals genau in Resonanz arbeitet, der bei einer Phasenverschiebung zwischen Spannung U und Strom I von cos ϕ =1 liegt.

Dies würde hier zur raschen Zerstörung der Leistungshalbleiterbauelemente 10 durch die Spannungsspitzen führen. Stattdessen ist die Steuerelektronik SEK so gestaltet, dass sie die Leistungselektronik bzw. deren Schwingkreis SKS in einem vorgebbaren Arbeitsbereich betreibt, der lediglich nahe der Resonanz bzw. Eigenfrequenz des Systems liegt.

Vorzugsweise wird der Schwingkreis so gesteuert bzw. geregelt, dass gilt 0,9 ≤ cos ϕ ≤ 0,99. Besonders günstig sind Werte, die im Bereich 0,95 ≤ cos ϕ ≤ 0,98 liegen. Dies führt nochmals zu einer Vermeidung von Spannungsspitzen und leistet daher der Miniaturisierung weiteren Vorschub.

Um das Schrumpfgerat 1 mit bestimmter Betriebssicherheit zu betreiben, ist die Schrumpfvorrichtung 0 mit einer automatischen Erwärmungssteuerung ausgestattet, welche einen automatisierten Schrumpfbetrieb ermöglicht.

Diese Erwärmungssteuerung wird durch eine entsprechende Steuerung bei der Schrumpfvorrichtung 0 umgesetzt, welche - grundsätzlich - auf einer Beobachtung der Induktivität bzw. deren Veränderung beim Betrieb der Schrumpfvorrichtung 0 basiert.

Die Induktivität L mit u = L*di/dt (u: Spannung, i: Stromstärke), ist eine charakteristische Größe wechselstromdurchflossener Spulen.

Bei induktiven Schrumpfgeräten bzw. Schrumpfvorrichtungen bildet der in den von der Induktionsspule umfangsseitig umschlossenen Raum eingeschobene Werkzeughalter mit seiner Hülsenpartie einen wesentlichen Bestandteil des magnetischen Kreises. Die Hülsenpartie bildet nämlich den Metallkern der Induktionsspule. Das Maß der zu messenden Induktivität hängt daher entscheidend davon ab, in welchem Maß die Hülsenpartie das Zentrum bzw. den sogenannten Kern der Induktionsspule ausfüllt, d. h. ob die betreffende Hülsenpartie einen kleineren oder größeren (Außen-)Durchmesser bzw. mehr oder weniger Masse besitzt.

Dabei hängt die messbare Induktivität (und der Widerstand) einer zum Schrumpfen eingesetzten Induktionsspule nicht nur von der Geometrie der Hülsenpartie ab, sondern auch von der Temperatur der Hülsenpartie des Werkzeughalters.

Beides kann - in Verwertbarem und Steuerbarem - genutzt werden, um - automatisiert - (zunächst) die Geometrie einer Hülsenpartie zu ermitteln/zu erkennen (A) wie auch (dann) den Erwärmungsvorgang zu überwachen/zu steuern (B) -, um so - bei Vermeidung "manueller" Fehlerquellen, weil automatisiert, - die Sicherheit bei einer Schrumpfvorrichtung zu verbessern.

Optional lässt sich dadurch auch noch eine geeignete Schrumpffrequenz (Arbeitsfrequenz) ermitteln (C).

### (A) (Automatische) Erkennung des/der aktuell in die Schrumpfvorrichtung bzw. deren Induktionsspule eingebrachten Werkzeughalters/Hülsenpartie

### (Al) Erstellung digitaler Fingerabdrücke

Die Zahl der unterschiedlichen zum Einsatz auf der Schrumpfvorrichtung in Frage kommenden Werkzeughalter ist endlich.

Aufgrund dessen können bzw. werden alle oder zumindest die wichtigsten auf der Schrumpfvorrichtung zum Einsatz kommenden Werkzeughalter, beispielsweise herstellerseitig, insbesondere geometrisch, vermessen und parametrisiert. Eine dabei insbesondere relevante (Kenn-)Größe für einen Werkzeughalter ist dabei auch der Außendurchmesser der Hülsenpartie eines Werkzeughalters.

Alle diese Daten werden - Werkzeughalter bzw. Hülsenpartie bezogen - in der Schrumpfvorrichtung 1 abgespeichert.

Weiter wird für jeden vermessenen Werkzeughalter ein ihn (induktiv beschreibender) digitaler Fingerabdruck ermittelt bzw. erstellt.

Hierzu dient das Maß der Stromaufnahme durch die Induktionsspule im Verlaufe einer bestimmten Zeiteinheit. D.h., die Zeit-/Stromkurve, für ein bestimmtes, vorgebbares (definiertes) Zeitintervall.

Um einen solchen digitalen - für einen bestimmten Werkzeughalter kennzeichnenden - Fingerabdruck zu ermitteln, wird mithilfe einer genau arbeitenden Leistungsquelle ein Strom mit bekannter Stromgröße, Stromform, Frequenz und Wirkungsdauer, d.h. ein Prüfimpuls, auf die - den "kalten" Werkzeughalter bzw. dessen Hülsenpartie aufweisenden - Induktionsspule aufgegeben ("Prüfimpuls").

"Kalt" meint dabei, dass dies im Wesentlichen bei Raumtemperatur vor bzw. unabhängig zu einem (eigentlichen) Schrumpfvorgang bei dem Werkzeughalter bzw. dessen Hülsenpartie, also bei einem "kalten" Werkzeughalter bzw. einer kalten" Hülsenpartie, durchgeführt wird.

Unter Stromgröße versteht man hier den Betrag der maximalen Amplitude des Stroms, d.h. den Verlauf der Stromstärke. Unter Stromform versteht man hier die Art der Wechselspannung, zum Beispiel eine Rechteckwechselspannung. Unter Einwirkungsdauer versteht man hier den Zeitraum für den der Prüfimpuls aufgegeben wird.

Je nachdem, welchen Außendurchmesser bzw. welche Masse die betreffende Hülsenpartie hat, ergibt sich für sie ein unterschiedlicher Verlauf der Stromaufnahme innerhalb der betreffenden Zeiteinheit ((vereinfacht ausgedrückt) als Antwort auf den Prüfimpuls), also eine unterschiedliche (die jeweilige Hülsenpartie bzw. den jeweiligen Werkzeughalter charakterisierende) Zeit-/Stromkurve, d.h. seinen magnetischen/elektrischen bzw. digitalen Fingerabdruck, (bei "Kaltbedingungen" - s oben zum "kalten" Werkzeughalter).

Für sämtliche zur Bearbeitung auf der Schrumpfvorrichtung in Betracht zu ziehenden Werkzeughalter bzw. Hülsenpartien wird die (durch den definierten Prüfimpuls generierte) Stromaufnahme innerhalb einer bestimmten Zeiteinheit, d.h. die Zeit-/Stromkurve bzw. der digitale Fingerabdruck, gemessen und in der Schrumpfvorrichtung 1 - Werkzeughalter bzw. Hülsenpartie bezogen - abgespeichert.

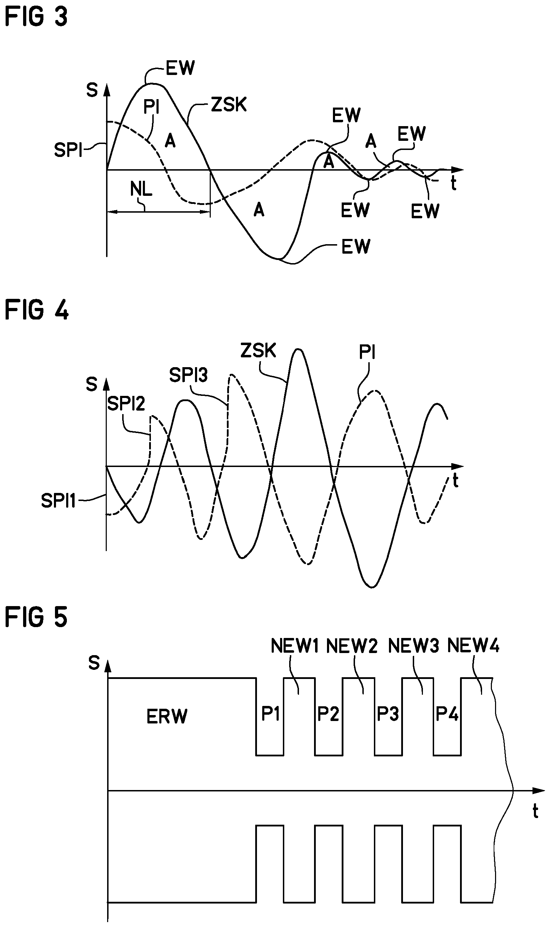

Die Zeit-/Stromkurven werden dabei auch auf sie beschreibende Kenngrößen "reduziert", welche in diesem Fall die Extremwerte (EW), die Fläche (A) sowie der (zeitliche) Abstand der Nulldurchgänge (NL) der ersten Periode ist (vgl. Fig. 3 - dort angedeutet), welche ebenfalls in der Schrumpfvorrichtung 1 - Werkzeughalter bzw. Hülsenpartie bezogen - abgespeichert werden.

Fig.en 3 und 4 (S = Strom (Stromstärke oder Spannung); t = Zeit) zeigen jeweils beispielhaft einen möglichen (aufgebrachten) Prüfimpuls (PI) und die (gemessene) Zeit-/Stromkurve (ZSK) für einen "kalten" Werkzeughalter 4. Wie die Fig. 3 und 4 im Vergleich erkennen lassen, weist der Prüfimpuls PI nach Fig. 3 einen Spannungsimpuls (SPI) auf (, wohingegen der Prüfimpuls nach Fig. 4 drei Spannungsimpulse (SPI1/2/3) beinhaltet.

Weiter werden dann auch bestimmte Schrumpfparameter, wie eine Zeit für den Erwärmungsvorgang, eine Schrumpf-/Erwärmungsfrequenz und eine Erwärmungs-/Schrumpftemperatur sowie ein Induktivitätsveränderungsparameter und ein Widerstandsveränderungsparameter (bzw. diesbezügliche Werte), in der Schrumpfvorrichtung 1 - Werkzeughalter bzw. Hülsenpartie bezogen - abgespeichert.

Dieser Induktivitätsveränderungsparameter bzw. Widerstandsveränderungsparameter drückt dabei bzw. beschreibt - Werkzeughalter bzw. Hülsenpartie bezogen - eine Veränderung der Induktivität mit der Temperatur für einen bestimmten Werkzeughalter bzw. Hülsenpartie.

### (A2) Erkennung eines zu schrumpfenden Werkzeughalters mittels des digitalen Fingerabdrucks

Wird nun - für einen Schrumpfvorgang - eine bestimmte Hülsenpartie eines bestimmten, zu schrumpfenden Werkzeughalters 4 in die Induktionsspule 1 eingebracht, (welchen Werkzeughalters 4 es nun zu erkennen gilt,) wird wiederum der entsprechende Prüfimpuls auf die den zu erkennenden "kalten" Werkzeughalter aufweisende Induktionsspule 1 aufgegeben, noch vor Beginn des eigentlichen induktiven Heizvorgangs bei dem Werkzeughalter 4 ("Kaltbedingungen").

Die dadurch nun erhaltene bzw. gemessene Zeit-/Stromkurve wird wieder auf die beschreibenden Kenngrößen, EW, A und NL "reduziert, welche Kenngrößen dann weiter mit den - Werkzeughalter bzw. Hülsenpartie bezogen - abgespeicherten Kenngrößen verglichen werden, um dadurch zu bestimmen, welche Hülsenpartie bzw. welcher Werkzeughalter in die Induktionsspule eingebracht worden ist.

Ist so der zu schrumpfende Werkzeughalter "erkannt", stehen so insbesondere auch sein Außendurchmesser und seine Schrumpfparameter (s. oben) fest, nach welchen dann der eigentliche Schrumpfvorgang erfolgt.

### (B) (Automatisierter) Schrumpfvorgang (FIG 5)

Während des Schrumpfvorgangs wird - dann weiterhin - die Zeit-/Stromkurve für den Werkzeughalter 4 gemessen (vgl. Fig. 5), anhand deren der Schrumpfvorgang gesteuert werden kann.

Bei dem Schrumpfvorgang erfolgt, wie Fig. 5 verdeutlicht (bzw. wie sich anhand der gemessenen Zeit-/Stromkurve erkennen lässt), zunächst eine Ersterwärmung des in die Induktionsspule eingebrachten Werkzeughalters bzw. dessen Hülsenpartie (ERW) gemäß der für diesen Werkzeughalter vorgebebenen (mittels des digitalen Fingerabdrucks ermittelten) Schrumpfparametern bzw. Ersterwärmungszeit, von beispielsweise 3 bis 4 Sekunden.

Nach der Ersterwärmung wird der Schrumpfvorgang kurzzeitig, beispielsweise für ca. 0,5 Sekunden unterbrochen (P1).

Zu Beginn der Unterbrechung erfolgt ein vollständiges Aufladen der Kondensatoreinheiten im Schwingkreis SKS.

Im Anschluss daran wird ein Kontrollimpuls, identisch zu dem Prüfimpuls, kurz der gleiche Impuls, auf die - den ersterwärmten Werkzeughalter bzw. dessen Hülsenpartie aufweisende - Induktionsspule aufgegeben - und die Zeit-/Stromkurve für diesen Kontrollimpuls gemessen (nicht sichtbar in Fig. 5).

Diese Kontrollimpuls-Zeit/Stromkurve wird wiederum auf die sie beschreibenden Kenngrößen "reduziert", d.h. die Extremwerte (EW), die Fläche (A) sowie der (zeitliche) Abstand der Nulldurchgänge (NL) der ersten Periode.

Anhand dieser Kennwerte des Kontrollimpulses bzw. zumindest eines dieser Kennwerte, wie beispielsweise die Fläche (A), wird entschieden, ob der Erwärmungsvorgang bzw. der Schrumpfvorgang (nach der Unterbrechung (P1)) für den eingebrachten Werkzeughalter bzw. Hülsenpartie fortgesetzt wird (oder nicht).

Dazu wird - unter Verwendung des Induktivitätsveränderungsparameters des eingebrachten Werkzeughalters bzw. Hülsenpartie bzw. dessen vorgegebenen Parameterwertes (Analoges kann auch mit dem Widerstandsveränderungsparameter durchgeführt werden) sowie dessen Kennwerte bzw. dessen zumindest einen Kennwert des Prüfimpulses, beispielsweise der Fläche (A) des Prüfimpulses, - eine maximal zulässige Veränderung der Induktivität (bzw. Widerstands - s. oben zum analogen Vorgehen), d.h. zulässige Grenzkennwerte bzw. zumindest ein zulässiger Grenzkennwert, ermittelt, beispielsweise durch:
Fläche A (bzw. Kennwert) des Prüfimpulses des eingebrachten Werkzeughalters - (Fläche A (bzw. Kennwert) des Prüfimpulses des eingebrachten Werkzeughalters * vorgegebenen Induktivitätsveränderungsparameterwertes).
Diese bzw. dieser wird mit den bzw. dem Kennwert des Kontrollimpulses, hier wieder beispielsweise die Fläche (A), verglichen, beispielsweise durch
Fläche A (bzw. Kennwert) des Kontrollimpulses des eingebrachten Werkzeughalters **(<) oder (=) oder (>)** Fläche A (bzw. Kennwert) des Prüfimpulses des eingebrachten Werkzeughalters - (Fläche A (bzw. Kennwert) des Prüfimpulses des eingebrachten Werkzeughalters * vorgegebenen Induktivitätsveränderungsparameterwertes) ("Kennwertevergleich").
Weichen die bzw. weicht der Kennwert des Kontrollimpulses um ein vorgebbares Kriterium von den bzw. dem zulässigen Grenzkennwert ab, so wird der Schrumpfvorgang beendet, beispielsweise
Fläche A (bzw. Kennwert) des Kontrollimpulses des eingebrachten Werkzeughalters < oder = oder > Fläche A (bzw. Kennwert) des Prüfimpulses des eingebrachten Werkzeughalters - (Fläche A (bzw. Kennwert) des Prüfimpulses des eingebrachten Werkzeughalters * vorgegebenen Induktivitätsveränderungsparameterwertes) ("Abbruchkriterium").

Andernfalls erfolgt die Fortsetzung des Schrumpfvorgangs (weiter mit den bekannten Schrumpfparametern) um eine nächste, zweite(/weitere) Schrumpfphase (NEW1 (Nacherwärmung 1)) - für beispielsweise weiteren 1,5 Sekunden.

Danach wird der Schrumpfvorgang ein zweites Mal (wiederholt), wiederum für ca.0,5 Sekunden, unterbrochen (P2) - und die Überprüfung wiederholt. D.h. es erfolgt wiederum das Aufladen der Kondensatoreinheiten, das Aufbringen des Kontrollimpulses und der "Kennwertevergleich" (s. oben) ("Schrumpfregime" - P1 (Überprüfung)/NEW1, P2 (Überprüfung)/NEW2, P3 (Überprüfung)/NEW3 usw.).

Ist - nun nach dieser zweiten Schrumpfphase (NEW2) - das "Abbruchkriterium" (s. oben) erfüllt, wird abgebrochen. Andernfalls wird - nach obigem - "Schrumpfregime" weitergeschrumpft (P2 (Überprüfung)/NEW2, P3 (Überprüfung)/NEW3 - vgl. Fig. 5), solange bis das "Abbruchkriterium" erfüllt ist.

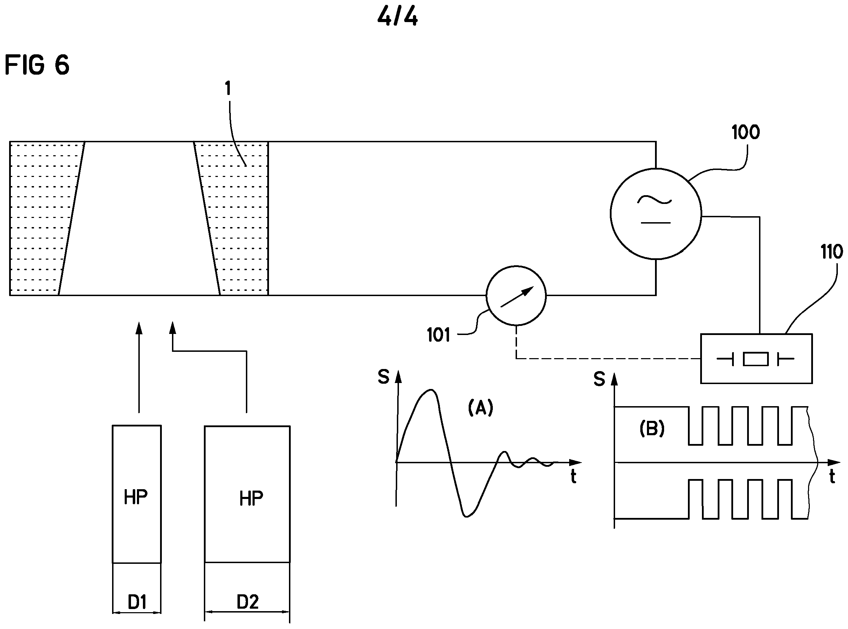

Fig. 6 verdeutlicht, wie der - Strom-/Zeitkurven abhängige - Schrumpfprozess bei der Schrumpfvorrichtung (vgl. (A) und (B) und (C)) bzw. dessen Steuerung gerätetechnisch umgesetzt werden kann.

Die Induktionsspule 1 der Schrumpfvorrichtung 0 wird, wie Fig. 6 zeigt, durch eine Leistungsquelle 100 gespeist, welche auch den Prüfimpuls sowie die Kontrollimpulse erzeugt.

In einer der Anschlussleitungen der Induktionsspule 1 befindet sich ein Messgerät 101, das die Zeit-/Stromkurve misst und bei dem es sich um ein (Strom-)Messgerät an sich bekannter Bauart handeln kann.

Mittels einer Steuerungseinheit 110 wird die Leistungsquelle dann - entsprechend dem beschriebenen Vorgehen ((A) und (B) und (C)) - dann auf Basis der gemessenen Strom-/Zeitkurven gesteuert.

### (C) Automatisierte Frequenzermittlung (optional)

Im Folgenden wird ein Verfahren beschrieben, mittels welchem - beispielsweise - bei vorbeschriebenem Schrumpfvorgang - eine geeignete Schrumpffrequenz automatisiert ermittelbar ist.

Dabei meint geeignete Schrumpffrequenz, eine Schrumpffrequenz, welche "knapp" unterhalb der Resonanzfrequenz liegt, steigt mit Annäherung der Schrumpf-/Erwärmungsfrequenz an die Resonanzfrequenz die Effizienz/Effektivität der Erwärmung, aber besteht noch keine Gefahr der Überlastung von Bauteilen bei der Induktionsspulen-Baueinheit, wie beim Betreiben mit der Resonanzfrequenz.

Dazu werden - vor Beginn des eigentlichen Schrumpfvorgangs - unmittelbar hintereinander mehrere, weitere definiert vorgegebene (Anpassungs-)Ströme bzw. Anpassungsimpulse, beispielsweise gleich dem Prüfimpuls und/oder den Kontrollimpulsen, auf die Induktionsspule (mit eingebrachtem Werkzeughalter bzw. Hülsenpartie) aufgegeben - mit jeweils unterschiedlichen Frequenzen.

Deren Zeit-/Stromkurven werden wieder gemessen, diese auf die Kennwerte reduziert und die Kennwerte verglichen.

Spiegelt sich so - beispielsweise im Kennwert "Extremwert (EW)" die Effektivität/Effizienz der Erwärmung wieder (d.h., je größer der Extremwert (EW), desto effektiver/effizienter die Erwärmung), so kann darüber die "effektivste/effizienteste" (Erwärmungs-)Frequenz erkannt - und diese als Resonanzfrequenz vermutet werden.

Für den Schrumpfvorgang einzustellende/anzuwendende Schrumpf-/Erwärmungsfrequenz kann dann eine Frequenz knapp oberhalb dieser - als Resonanzfrequenz vermuteten - "effektivsten/effizientesten" - Frequenz ausgewählt - und nach dieser der Schrumpfvorgang durchgeführt werden.

## Patentansprüche

1. **Verfahren zur Steuerung eines induktiven Erwärmungsvorgangs** für eine Induktionsspulen-Baueinheit mit einer in einer Induktionsspule der Induktionsspulen-Baueinheit eingebrachten Hülsenpartie eines Werkzeughalters,
**dadurch gekennzeichnet, dass**
- ein definiert vorgegebener Prüfimpuls auf die Induktionsspule noch vor Beginn eines induktiven Erwärmungsvorgangs bei der in die Induktionsspule eingebrachten Hülsenpartie aufgegeben wird, für diesen Prüfimpuls eine Zeit-/Stromkurve für die in die Induktionsspule eingebrachte Hülsenpartie ermittelt wird und anhand der Zeit-/Stromkurve des Prüfimpuls die eingebrachte Hülsenpartie erkannt wird,
- für die in die Induktionsspule eingebrachte Hülsenpartie auf Basis der Erkennung Erwärmungsparameter festgelegt werden und der induktive Erwärmungsvorgang auf Basis der für die erkannte Hülsenpartie festgelegten Erwärmungsparameter gestartet wird,
- der induktive Erwärmungsvorgang zumindest einmal unterbrochen wird, während der Unterbrechung ein weiteres Mal ein definiert vorgegebener Kontrollimpuls auf die Induktionsspule bei der in die Induktionsspule eingebrachten Hülsenpartie aufgegeben wird und für diesen Kontrollimpuls eine weitere Zeit-/Stromkurve für die in die Induktionsspule eingebrachten Hülsenpartie ermittelt wird,
- anhand der weiteren Zeit-/Stromkurve des Kontrollimpuls entschieden wird, ob der Erwärmungsvorgang fortgesetzt oder endgültig beendet wird.

2. Verfahren nach mindestens einem der voranstehenden Ansprüche,
**dadurch gekennzeichnet, dass**
der Prüfimpuls und/oder der Kontrollimpuls nach Stromgröße, Stromform, Frequenz und/oder Wirkungsdauer definiert vorgegeben sind/ist.

3. Verfahren nach mindestens einem der voranstehenden Ansprüche,
**dadurch gekennzeichnet, dass**
der Prüfimpuls und/oder der Kontrollimpuls ein, zwei oder mehrere Stromimpulse umfasst.

4. Verfahren nach mindestens einem der voranstehenden Ansprüche,
**dadurch gekennzeichnet, dass**
der Prüfimpuls und der Kontrollimpuls gleich sind.

5. Verfahren nach mindestens einem der voranstehenden Ansprüche,
**dadurch gekennzeichnet, dass**
die Zeit-/Stromkurve des Prüfimpuls und/oder des Kontrollimpuls gemessen und/oder normiert, insbesondere auf eine Referenznetzspannung, insbesondere auf eine deutsche Referenznetzspannung, normiert, werden/wird.

6. Verfahren nach mindestens einem der voranstehenden Ansprüche,
**dadurch gekennzeichnet, dass**
die Zeit-/Stromkurve des Prüfimpuls und/oder des Kontrollimpuls ausgewertet werden/wird, wobei bei der Auswertung eine Zeit-/Stromkurven-Kenngröße ermittelt wird, anhand welcher Zeit-/Stromkurven-Kenngröße insbesondere eine Geometrie, insbesondere ein Außendurchmesser, der eingebrachten Hülsenpartie oder ein Erwärmungszustand für die eingebrachte Hülsenpartie abgeleitet wird.

7. Verfahren nach mindestens einem der voranstehenden Ansprüche,
**dadurch gekennzeichnet, dass**
die Zeit-/Stromkurven-Kenngröße eine Fläche, eine Amplitude, insbesondere ein Amplituden-Extremum, eine Anzahl und/oder ein zeitlicher Abstand von Nulldurchgängen, eine Flankensteilheit und/oder eine Tangente bei der Zeit-/Stromkurve oder eine daraus abgeleitete, insbesondere statistisch abgeleitete, Kenngröße ist.

8. Verfahren nach mindestens einem der voranstehenden Ansprüche,
**dadurch gekennzeichnet, dass**
die auf Basis der Erkennung festgelegten Erwärmungsparameter eine Zeit für den Erwärmungsvorgang und/oder eine Zeit für eine Ersterwärmung des Erwärmungsvorgangs und/oder eine Schrumpf-/Erwärmungsfrequenz und/oder eine Erwärmungs-/Schrumpftemperatur sowie und/oder ein Induktivitätsveränderungsparameter und/oder ein Widerstandsveränderungsparameter sind/ist, insbesondere, dass die Zeit für die Ersterwärmung des Erwärmungsvorgangs 1/3 bis 1/2 der Zeit für den Erwärmungsvorgang ist.

9. Verfahren nach mindestens einem der voranstehenden Ansprüche,
**dadurch gekennzeichnet, dass**
während einer Unterbrechung des Erwärmungsvorgangs vor Aufgabe des weiteren, definiert vorgegebenen Kontrollimpuls ein Aufladevorgang bei einer den weiteren definiert vorgegebenen Kontrollimpuls erzeugenden Baueinheit durchgeführt wird, wobei insbesondere bei dem Aufladevorgang ein Kondensator eines Schwingkreises aufgeladen wird.

10. Verfahren nach mindestens einem der voranstehenden Ansprüche,
**dadurch gekennzeichnet, dass**
der Erwärmungsvorgang mehrmals unterbrochen wird, wobei während jeder Unterbrechung ein weiteres Mal der definiert vorgegebene Kontrollimpuls auf die Induktionsspule bei der in die Induktionsspule eingebrachten Hülsenpartie aufgegeben wird, für diesen Kontrollimpuls eine weitere Zeit-/Stromkurve für die in die Induktionsspule eingebrachte Hülsenpartie ermittelt wird und
anhand der weiteren Zeit-/Stromkurve entschieden wird, ob der Erwärmungsvorgang nach der jeweiligen Unterbrechung fortgesetzt oder endgültig beendet wird.

11. Verfahren nach mindestens einem der voranstehenden Ansprüche,
**dadurch gekennzeichnet, dass**
die Entscheidung den Erwärmungsvorgangs fortzusetzen, in Abhängigkeit einer vorgegebenen Veränderung der Zeit-/Stromkurve des Prüfimpuls getroffen wird, wobei insbesondere die vorgegebene Veränderung der Zeit-/Stromkurve des Prüfimpuls unter Verwendung eines Induktivitätsveränderungsparameters bestimmt wird.

12. Verfahren nach mindestens dem voranstehenden Anspruch,
**dadurch gekennzeichnet, dass**
die vorgegebene Veränderung der Zeit-/Stromkurve des Prüfimpuls eine temperaturabhängige Veränderung einer Induktivität und/oder eines Widerstands bei einer Hülsenpartie eines Werkzeughalters beschreibt.

13. Verfahren nach mindestens einem der voranstehenden Ansprüche,
**dadurch gekennzeichnet, dass**
mehrere weitere definiert vorgegebene Anpassungsimpulse auf die Induktionsspule, insbesondere noch vor Beginn oder am Anfang des induktiven Erwärmungsvorgangs bei der in die Induktionsspule eingebrachten Hülsenpartie aufgegeben werden, für diese Anpassungsimpulse Zeit-/Stromkurven für die in die Induktionsspule eingebrachte Hülsenpartie ermittelt werden und anhand der Zeit-/Stromkurven der Anpassungsimpulse eine Schrumpf-/Erwärmungsfrequenz festgelegt wird.

14. Verfahren nach mindestens dem voranstehenden Anspruch,
**dadurch gekennzeichnet, dass**
die Zeit-/Stromkurven der Anpassungsimpulse ausgewertet werden, wobei bei der Auswertung für die Zeit-/Stromkurven der Anpassungsimpulse jeweils eine Zeit-/Stromkurven-Kenngröße ermittelt wird und diese verglichen werden.

15. **Induktionsspulen-Baueinheit** zur Durchführung eines Verfahrens nach mindestens einem der voranstehenden Verfahrensansprüche mit einer Induktionsspule, in welche eine Hülsenpartie eines Werkzeughalters einbringbar ist,
**gekennzeichnet durch**
- eine Schaltung, mittels welcher der Prüfimpuls und der Kontrollimpuls erzeugbar sind, und
- eine Steuereinheit, mittels welcher die Induktionsspule und die Schaltung derart steuerbar ist und welche derart eingerichtet ist, dass:
- der definiert vorgegebene Prüfimpuls auf die Induktionsspule noch vor Beginn eines induktiven Erwärmungsvorgangs bei der in die Induktionsspule eingebrachten Hülsenpartie aufgebbar ist, für diesen Prüfimpuls eine Zeit-/Stromkurve für die in die Induktionsspule eingebrachte Hülsenpartie ermittelbar ist und anhand der Zeit-/Stromkurve des Prüfimpuls die eingebrachte Hülsenpartie erkennbar ist,
- für die in die Induktionsspule eingebrachte Hülsenpartie auf Basis der Erkennung Erwärmungsparameter festlegbar sind und der induktive Erwärmungsvorgang auf Basis der für die erkannte Hülsenpartie festgelegten Erwärmungsparameter startbar ist,
- der induktive Erwärmungsvorgang zumindest einmal unterbrechbar ist, während der Unterbrechung ein weiteres Mal ein definiert vorgegebener Kontrollimpuls auf die Induktionsspule bei der in die Induktionsspule eingebrachten Hülsenpartie aufgebbar ist und für diesen Kontrollimpuls eine weitere Zeit-/Stromkurve für die in die Induktionsspule eingebrachte Hülsenpartie ermittelbar ist,
- anhand der weiteren Zeit-/Stromkurve des Kontrollimpuls entscheidbar ist, ob der Erwärmungsvorgang fortgesetzt oder endgültig beendet wird.

16. Induktionsspulen-Baueinheit nach mindestens dem voranstehenden Anspruch,
**gekennzeichnet durch**
eine Messeinrichtung, mittels welcher die Zeit-/Stromkurve für die in die Induktionsspule einbringbare Hülsenpartie messbar ist, insbesondere, dass die Messeinrichtung eine Strom-Messeinrichtung oder eine Spannungs-Messeinrichtung ist und/oder dass die Messeinrichtung in einem Eingangskreis und/oder in einem Zwischenkreis und/oder in einem Ausgangskreis der Schaltung eingebaut ist.

## Claims

1. **Method for controlling an inductive heating process** for an induction coil structural unit with a sleeve portion of a tool holder inserted in an induction coil of the induction coil structural unit,
**characterized in that**
- a defined-preset test pulse is applied to the induction coil even before the beginning of an inductive heating process in the sleeve portion inserted in the induction coil, a time/current curve for the sleeve portion inserted in the induction coil is determined for this test pulse and the inserted sleeve portion is detected on the basis of the time/current curve of the test pulse,
- on the basis of the detection, heating parameters are established for the sleeve portion inserted in the induction coil and the inductive heating process is started on the basis of the heating parameters established for the detected sleeve portion,
- the inductive heating process is interrupted at least once; during the interruption, once again a defined-preset check pulse is applied to the induction coil with the sleeve portion inserted in the induction coil and a further time/current curve for the sleeve portion inserted in the induction coil is determined for this check pulse and
- it is decided on the basis of the further time/current curve of the check pulse whether the heating process is continued or permanently ended.

2. Method according to at least one of the preceding claims,
**characterized in that**
the test pulse and/or the check pulse are/is defined-preset on the basis of current size, current waveform, frequency and/or duration of effect.

3. Method according to at least one of the preceding claims,
**characterized in that**
the test pulse and/or the check pulse comprises one, two or more current pulses.

4. Method according to at least one of the preceding claims,
**characterized in that**
the test pulse and the check pulse are the same.

5. Method according to at least one of the preceding claims,
**characterized in that**
the time/current curve of the test pulse and/or of the check pulse are/is measured and/or normalized, in particular normalized to a reference grid voltage, in particular to a German reference grid voltage.

6. Method according to at least one of the preceding claims,
**characterized in that**
the time/current curve of the test pulse and/or of the check pulse are/is evaluated, wherein a time/current curve characteristic is determined in the evaluation, on the basis of which time/current curve characteristic in particular a geometry, in particular an outer diameter, of the inserted sleeve portion or a heating state for the inserted sleeve portion is deduced.

7. Method according to at least one of the preceding claims,
**characterized in that**
the time/current curve characteristic is a surface area, an amplitude, in particular an amplitude extreme, a number and/or a time interval of zero crossings, a flank steepness and/or a tangent in the case of the time/current curve or a characteristic deduced from it, in particular statistically deduced.

8. Method according to at least one of the preceding claims,
**characterized in that**
the heating parameter(s) established on the basis of the detection are/is a time for the heating process and/or a time for an initial heating of the heating process and/or a shrinking/heating frequency and/or a heating/shrinking temperature and/or a change-in-inductance parameter and/or a change-in-resistance parameter, in particular in that the time for the initial heating of the heating process is 1/3 to 1/2 of the time for the heating process.

9. Method according to at least one of the preceding claims,
**characterized in that**
during an interruption of the heating process, before applying the further, defined-preset check pulse, a charging process is carried out in a structural unit generating the further defined-preset check pulse, wherein in particular a capacitor of an oscillating circuit is charged in the charging process.

10. Method according to at least one of the preceding claims,
**characterized in that**
the heating process is interrupted a number of times, wherein during each interruption once again the defined-preset check pulse is applied to the induction coil with the sleeve portion inserted in the induction coil; a further time/current curve for the sleeve portion inserted in the induction coil is determined for this check pulse and
it is decided on the basis of the further time/current curve whether the heating process is continued or permanently ended after the respective interruption.

11. Method according to at least one of the preceding claims,
**characterized in that**
the decision to continue the heating process is taken in dependence on a preset change of the time/current curve of the test pulse, wherein in particular the preset change of the time/current curve of the test pulse is determined by using a change-in-inductance parameter.

12. Method according to at least the preceding claim,
**characterized in that**
the preset change of the time/current curve of the test pulse describes a temperature-dependent change in an inductance and/or a resistance in a sleeve portion of the tool holder.

13. Method according to at least one of the preceding claims,
**characterized in that**
a number of further defined-preset adaptation pulses are applied to the induction coil, in particular even before the beginning or at the start of the inductive heating process in the sleeve portion inserted in the induction coil, time/current curves for the sleeve portion inserted in the induction coil are determined for these adaptation pulses and a shrinking/heating frequency is established on the basis of the time/current curves of the adaptation pulses.

14. Method according to at least the preceding claim,
**characterized in that**
the time/current curves of the adaptation pulses are evaluated, wherein a time/current curve characteristic is determined in each case in the evaluation for the time/current curves of the adaptation pulses and these characteristics are compared.

15. **Induction coil structural unit** for carrying out a method according to at least one of the preceding method claims with an induction coil into which a sleeve portion of a tool holder can be inserted,
**characterized by**
- a circuit, by means of which the test pulse and the check pulse can be generated, and
- a control unit, by means of which the induction coil and the circuit can be controlled in such a way and which is designed in such a way that:
- the defined-preset test pulse can be applied to the induction coil even before the beginning of an inductive heating process in the sleeve portion inserted in the induction coil, a time/current curve for the sleeve portion inserted in the induction coil can be determined for this test pulse and the inserted sleeve portion can be detected on the basis of the time/current curve of the test pulse,
- on the basis of the detection, heating parameters can be established for the sleeve portion inserted in the induction coil and the inductive heating process can be started on the basis of the heating parameters established for the detected sleeve portion,
- the inductive heating process can be interrupted at least once; during the interruption, once again a defined-preset check pulse can be applied to the induction coil with the sleeve portion inserted in the induction coil and a further time/current curve for the sleeve portion inserted in the induction coil can be determined for this check pulse and
- it can be decided on the basis of the further time/current curve of the check pulse whether the heating process is continued or permanently ended.

16. Induction coil structural unit according to at least the preceding claim,
**characterized by**
a measuring device, by means of which the time/current curve for the sleeve portion that can be inserted into the induction coil can be measured, in particular in that the measuring device is a current measuring device or a voltage measuring device and/or in that the measuring device is installed in an input circuit and/or in an intermediate circuit and/or in an output circuit of the circuit.

## Revendications

1. Procédé de commande d'un processus de chauffage par induction destiné à une unité modulaire à bobine d'induction avec une partie formant manchon d'un porte-outil qui est insérée dans une bobine d'induction de l'unité modulaire à bobine d'induction,
**caractérisé en ce que**
- une impulsion de test spécifiée de manière définie est appliquée sur la bobine d'induction avant le début d'un processus de chauffage par induction lorsque la partie formant manchon est insérée dans la bobine d'induction, une courbe temps/courant est déterminée, pour cette impulsion de test, pour la partie formant manchon insérée dans la bobine d'induction et est identifiée sur la base de la courbe temps/courant de la partie formant manchon insérée par impulsion de test,
- les paramètres de chauffage sont définis pour la partie formant manchon insérée dans la bobine d'induction sur la base de l'identification et le processus de chauffage par induction est démarré sur la base des paramètres de chauffage définis pour la partie formant manchon identifiée,
- le processus de chauffage par induction est interrompu au moins une fois, une impulsion de commande spécifiée de manière définie est appliquée une autre fois pendant l'interruption sur la bobine d'induction pour la partie formant manchon insérée dans la bobine d'induction et pour cette impulsion de commande, une autre courbe temps/courant est déterminée pour la partie formant manchon insérée dans la bobine d'induction,
- une décision est prise sur la base de l'autre courbe temps/courant de l'impulsion de commande quant à savoir si le processus de chauffage doit être poursuivi ou définitivement terminé.

2. Procédé selon l'une au moins des revendications précédentes,
**caractérisé en ce que**
l'impulsion de test et/ou l'impulsion de commande sont spécifiées en fonction de l'intensité du courant, de la forme du courant, de la fréquence et/ou de la durée d'action.

3. Procédé selon l'une au moins des revendications précédentes,
**caractérisé en ce que**
l'impulsion de test et/ou l'impulsion de commande comprend une, deux ou plusieurs impulsions de courant.

4. Procédé selon l'une au moins des revendications précédentes,
**caractérisé en ce que**
l'impulsion de test et l'impulsion de commande sont identiques.

5. Procédé selon l'une au moins des revendications précédentes,
**caractérisé en ce que**
la courbe temps/courant de l'impulsion de test et/ou de l'impulsion de commande est mesurée et/ou normalisée, en particulier normalisée à une tension de réseau de référence, en particulier à une tension de réseau de référence allemande.

6. Procédé selon l'une au moins des revendications précédentes,
**caractérisé en ce que**
la courbe temps/courant de l'impulsion de test et/ou de l'impulsion de commande sont évaluées, un paramètre de courbe temps/courant étant déterminé pendant l'évaluation sur la base duquel est déduit un paramètre de courbe temps/courant, en particulier une géométrie, en particulier un diamètre extérieur, de la partie formant manchon insérée ou un état de chauffage de la partie formant manchon insérée.

7. Procédé selon l'une au moins des revendications précédentes,
**caractérisé en ce que**
le paramètre de courbe temps/courant est une surface, une amplitude, en particulier un extremum d'amplitude , un nombre et/ou un intervalle de temps entre des passages par zéro, une pente et/ou une tangente à la courbe temps/courant ou une grandeur dérivée, en particulier statistiquement, de ceux-ci.

8. Procédé selon l'une au moins des revendications précédentes,
**caractérisé en ce que**
les paramètres de chauffage déterminés sur la base de l'identification sont une durée du processus de chauffage et/ou une durée d'un préchauffage du processus de chauffage et/ou une fréquence de rétraction/chauffage et/ou une température de chauffage/rétraction et/ou un paramètre de variation d'inductance et/ou un paramètre de variation de résistance, en particulier, **en ce que** le temps de préchauffage du processus de chauffage est 1/3 à 1/2 du temps du processus de chauffage.

9. Procédé selon l'une au moins des revendications précédentes,
**caractérisé en ce que**
lors d'une interruption du processus de chauffage, avant la délivrance de l'autre impulsion de commande spécifiée de manière définie, un processus de charge est effectué sur une unité modulaire générant l'impulsion de commande spécifiée de manière définie, un condensateur d'un circuit oscillant étant chargé pendant le processus de charge.

10. Procédé selon l'une au moins des revendications précédentes,
**caractérisé en ce que**
le processus de chauffage est interrompu plusieurs fois, l'impulsion de commande définie étant appliquée une autre fois pendant chaque interruption sur la bobine d'induction lorsque la partie formant manchon est insérée dans la bobine d'induction, une autre courbe temps/courant est déterminée pour cette impulsion de commande pour la partie formant manchon insérée dans la bobine d'induction et
une décision est prise sur la base de l'autre courbe temps/courant quant à savoir si le processus de chauffage se poursuit après l'interruption respective ou s'il est définitivement terminé.

11. Procédé selon l'une au moins des revendications précédentes,
**caractérisé en ce que**
la décision de poursuivre le processus de chauffage est prise en fonction d'une variation prédéterminée de la courbe temps/courant de l'impulsion de test, en particulier la variation prédéterminée de la courbe temps/courant de l'impulsion de test étant déterminée à l'aide d'un paramètre de variation d'inductance.

12. Procédé selon au moins la revendication précédente,
**caractérisé en ce que**
la variation spécifiée de la courbe temps/courant de l'impulsion de test décrit une variation, en fonction de la température, d'une inductance et/ou d'une résistance dans une partie formant manchon d'un porte-outil.

13. Procédé selon l'une au moins des revendications précédentes,
**caractérisé en ce que**
en particulier avant le début ou au début du processus de chauffage par induction lorsque la partie formant manchon est insérée dans la bobine d'induction, plusieurs autres impulsions d'adaptation spécifiées de manière définie sont appliquées sur la bobine d'induction, des courbes temps/courant pour la partie formant manchon insérée dans la bobine d'induction sont déterminées pour ces impulsions d'adaptation et une fréquence de retrait/chauffage est déterminée sur la base des courbes temps/courant des impulsions d'adaptation.

14. Procédé selon au moins la revendication précédente,
**caractérisé en ce que**
les courbes temps/courant des impulsions d'adaptation sont évaluées, un paramètre de courbe temps/courant étant déterminé à chaque fois pendant l'évaluation des courbes temps/courant des impulsions d'adaptation, et ces paramètres sont comparés.

15. Unité modulaire à bobine d'induction destinée à mettre en œuvre un procédé selon l'une au moins des revendications de procédé précédentes, ladite unité modulaire comprenant une bobine d'induction dans laquelle peut être insérée une partie formant manchon d'un porte-outil,
**caractérisée par**
- un circuit permettant de générer l'impulsion de test et l'impulsion de commande, et
- une unité de commande permettant de commander la bobine d'induction et le circuit, et étant conçue de manière à ce que :
- l'impulsion de test spécifiée de manière définie puisse être appliquée sur la bobine d'induction avant le début d'un processus de chauffage inductif lorsque la partie formant manchon est insérée dans la bobine d'induction, une courbe temps/courant de la partie formant manchon insérée dans la bobine d'induction peut être déterminée pour cette impulsion de test et la partie formant manchon insérée peut être identifiée sur la base de la courbe temps/courant de l'impulsion de test,
- les paramètres de chauffage peuvent être définis pour la partie formant manchon insérée dans la bobine d'induction sur la base de l'identification et le processus de chauffage par induction peut être démarré sur la base des paramètres de chauffage définis pour la partie formant manchon identifiée,
- le processus de chauffage par induction peut être interrompu au moins une fois, une impulsion de commande spécifiée de manière définie peut être appliquée une autre fois pendant l'interruption, sur la bobine d'induction dans la partie formant manchon insérée dans la bobine d'induction et une autre courbe temps/courant de la partie formant manchon insérée dans la bobine d'induction peut être déterminée pour cette impulsion de commande,
- une décision peut être prise sur la base de l'autre courbe temps/courant de l'impulsion de commande quant à savoir si le processus de chauffage doit être poursuivi ou définitivement terminé.

16. Unité modulaire à bobine d'induction selon au moins la revendication précédente,
**caractérisée par**
un module de mesure qui permet de mesurer la courbe temps/courant de la partie formant manchon qui peut être insérée dans la bobine d'induction, en particulier en ce que le module de mesure est un module de mesure de courant ou un module de mesure de tension et/ou en ce que le module de mesure est incorporé dans un circuit d'entrée et/ou dans un circuit intermédiaire et/ou dans un circuit de sortie du montage.
